# EUROPEAN PATENT SPECIFICATION

(11) **EP 4 266 141 B1**
(45) Date of publication and mention of the grant of the patent: **19.02.2025**
(21) Application number: 20965870.7
(22) Date of filing: 15.12.2020
(51) Int. Cl.: A01D 34/00, G06Q 10/0631, G05D 1/86, G05D 1/85

(54) **MANAGEMENT SYSTEM FOR MOBILE OBJECT, PROGRAM, AND MANAGEMENT METHOD FOR MOBILE OBJECT**
VERWALTUNGSSYSTEM FÜR EIN MOBILES OBJEKT, PROGRAMM UND VERWALTUNGSVERFAHREN FÜR EIN MOBILES OBJEKT
SYSTÈME DE GESTION POUR OBJET MOBILE, PROGRAMME, ET PROCÉDÉ DE GESTION POUR OBJET MOBILE

(43) Date of publication of application: 25.10.2023
(73) Proprietor: Yamabiko Corporation, Tokyo 1988760 (JP)
(72) Inventor: YAMADA Ryota, Ohme-shi,Tokyo 1988760 (JP); NAKANO Kenji, Ohme-shi,Tokyo 1988760 (JP); HOUSSA Benjamin, Ohme-shi,Tokyo 1988760 (JP)
(74) Representative: Winter, Brandl - Partnerschaft mbB
(86) International application number: PCT/JP2020/046658
(87) International publication number: WO 2022/130482

(56) References cited:
- WO-A1-2019/167205
- WO-A1-2020/171317
- CN-A- 102 960 125
- JP-A- 2016 517 591
- JP-A- 2017 010 161
- JP-A- 2019 174 890
- US-A1- 2013 317 680

## Description

### TECHNICAL FIELD

The present invention relates to a management system, a program, and a management method for a mobile object.

### RELATED ART

A mobile object such as a self-propelled robotic lawn mower can run even in an area where there is no electrical outlet (commercial power supply) using an external battery or other means.

CN 201426049 Y discloses a technology of using an external battery charged by solar power generation to operate a control device of a robot working machine so as to drive the robot working machine.

### SUMMARY

### Problems to be Solved by Invention

However, in the technology disclosed in CN 201426049 Y, operation of the robot working machine is not controlled according to remaining amount of the external battery charged by the solar power generation, thus after the remaining amount of the external battery becomes zero, position of the robot working machine cannot be recognized, making it difficult for the robot working machine to return to normal state.

CN 102960125 A discloses a solar intelligent navigation power supply station for a robot mower. However, the robot mower of CN 102960125 A is not controlled according to remaining amount of an external battery of a power supply station.

### Means for Solving Problems

The above described technical problem is solved by the subject-matter of independent claims. Preferred embodiments of the present invention are the subject-matter of dependent claims.

According to such a management system for a mobile object, a mobile object such as a self-propelled robotic lawn mower can be stopped at a proper position before remaining amount of an external battery reaches zero, and can be returned to normal state after the external battery returns to charge.

### BRIEF DESCRIPTION OF DRAWINGS

FIG. 1 is a schematic diagram of a management system 1 for a mobile object 4 including an information processing apparatus 3.
FIG. 2 is a schematic diagram of a management system 1 including an information processing apparatus 3 and solar power generation 7 (renewable energy).
FIG. 3 is a schematic diagram of a management system 1 including an information processing apparatus 3 and an external server 8.
FIG. 4 is a block diagram showing a hardware configuration of an information processing apparatus 3.
FIG. 5 is a functional block diagram representing function performed by a controller 33 in an information processing apparatus 3.
FIG. 6 is a diagram showing an example of instruction information DI and operation information MI used in a management system 1.
FIG. 7 is a diagram showing an example of weather information WI and flight information OI used in a management system 1.

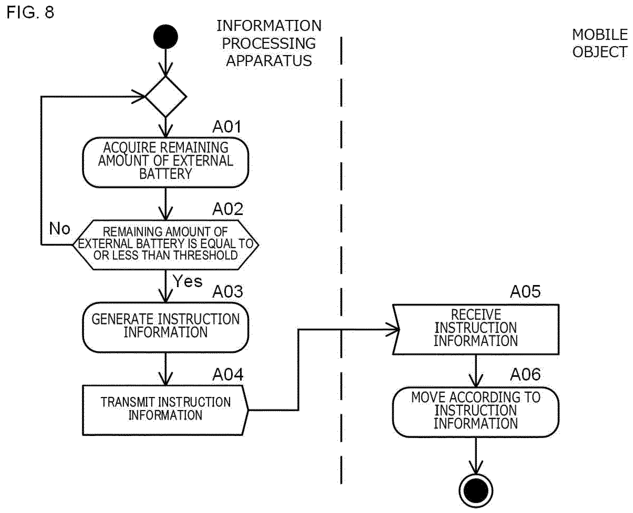

FIG. 8 is an activity diagram of a management method for a mobile object 4 according to an embodiment.

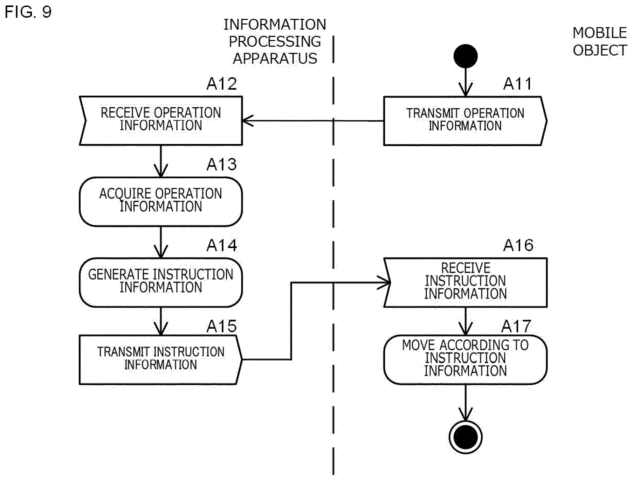

FIG. 9 is an activity diagram of a management method for a mobile object 4 according to an embodiment.

### DETAILED DESCRIPTION

A program for realizing a software may be provided as a non-transitory computer readable medium that can be read by a computer or may be provided for download from an external server or may be provided so that the program can be activated on an external computer to realize functions thereof on a client terminal (so-called cloud computing).

Further, in the present embodiment, "unit" or "means" may include, for instance, a combination of hardware resources implemented by a circuit in a broad sense and information processing of software that can be concretely realized thereby these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

### 1. Overall configuration

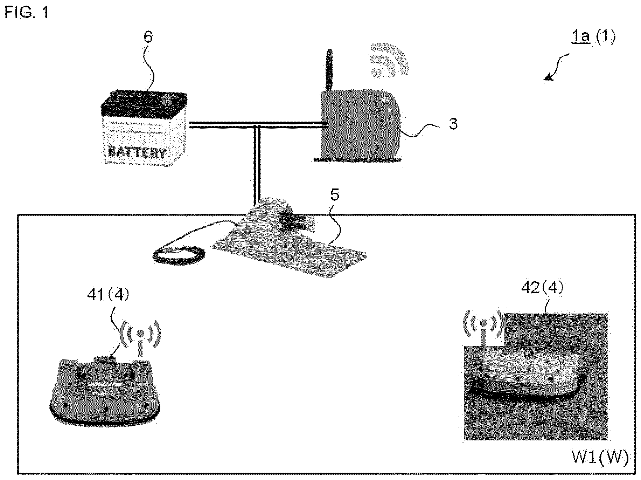

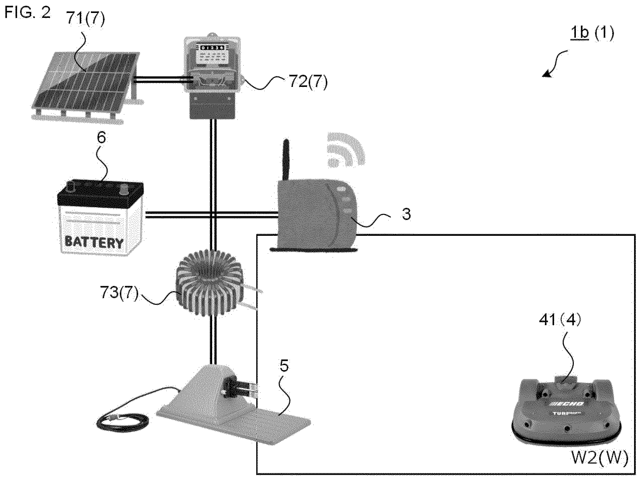

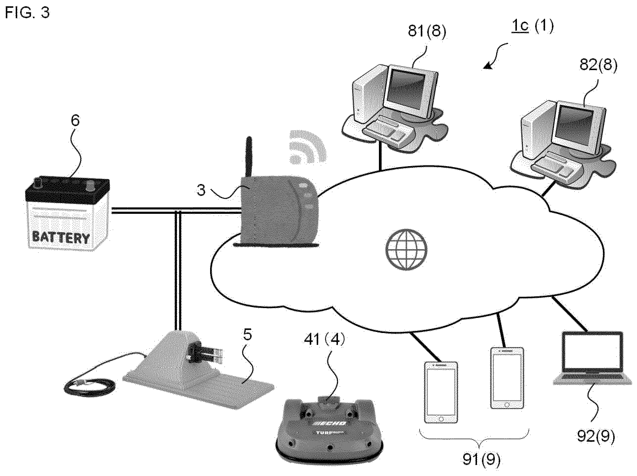

The present chapter describes a management system 1 for a mobile object 4 according to the present embodiment. FIG. 1 is a schematic diagram of a management system 1 for a mobile object 4 including an information processing apparatus 3. The management system 1 comprises the information processing apparatus 3, the mobile object 4, a charging station 5, and an external battery 6. The mobile object 4 freely travels within a working area W, and is charged by the external battery 6 in the working area W when remaining amount is declining. FIG. 2 is a schematic diagram of a management system 1 including an information processing apparatus 3 and solar power generation 7 (renewable energy). As represented in FIG. 2, the management system 1 further comprises the solar power generation 7. FIG. 3 is a schematic diagram of a management system 1 including an information processing apparatus 3 and an external server 8. As shown in FIG. 3, the management system 1 further comprises the external server 8, which are configured to communicate with each other through an electric communication line.

### 1.1. Information processing apparatus 3

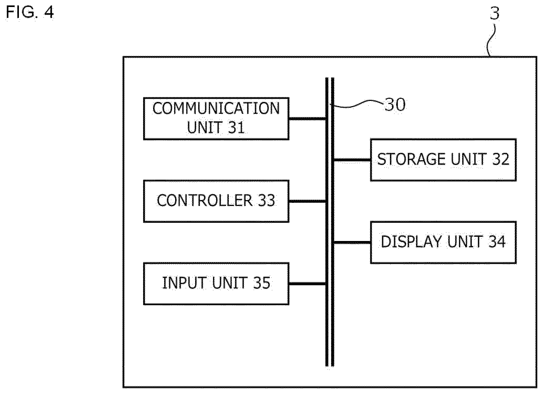

FIG. 4 is a block diagram showing a hardware configuration of the information processing apparatus 3. The information processing apparatus 3 comprises a communication unit 31, a storage unit 32, a controller 33, a display unit 34, and an input unit 35. These components may be electrically connected inside the information processing apparatus 3 via a communication bus 30.

### (Communication unit 31)

Although wired type communication means such as USB, IEEE1394, Thunderbolt, wired LAN network communication, etc. are preferred, the communication unit 31 may include wireless LAN network communication, mobile communication such as LTE/5G, Bluetooth (registered trademark) communication, etc. if necessary. In other words, it is more preferable to implement as a set of these multiple communication means.

### (Storage unit 32)

The storage unit 32 is configured to store various information as defined by the foregoing description. This can be implemented as a storage device such as a solid state drive (SSD) or as a memory such as a random access memory (RAM) that stores temporarily necessary information (arguments, arrays, etc.) related to program operation. Further, a combination thereof may be applied as well.

### (Controller 33)

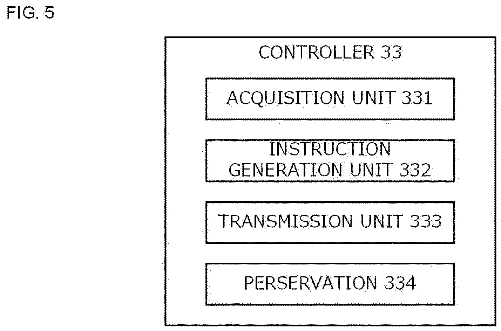

The controller 33 is configured to perform process and control of overall operation regarding the information processing apparatus 3. The controller 33 is, for instance, a central processing unit (CPU) (not shown). FIG. 5 is a functional block diagram representing function performed by the controller 33 in the information processing apparatus 3. The controller 33 is configured to implement various functions related to the information processing apparatus 3 by reading a predetermined program stored in the storage unit 32. In FIG. 5, the controller 33 is represented as a single one, but it is not limited thereto in practice, and may be implemented so as to include two or more controllers 33 for each function. Further, a combination thereof may be applied as well. Each of these functions will be described in detail in the next chapter.

### (Display unit 34)

The display unit 34 may be included in the information processing apparatus 3 or may be externally attached, for instance. The display unit 34 is a display device such as a CRT display, a liquid crystal display, an organic EL display, a plasma display, or the like, which is externally attached to or built into the information processing apparatus 3. It is preferable to use different types of these devices according to type of the information processing apparatus 3. The display device responds to a control signal from the controller 33 and generates a display screen. The display screen can be selectively displayed in response to the control signal from the controller 33. A user can grasp operational status of the management system 1 or operational status of the mobile object 4 displayed on the display unit 34. These operating statuses may be displayed on an information processing terminal 9 of the user through an electric communication line.

### (Input unit 35)

The input unit 35 is configured to receive various instructions or information input from the user. The input unit 35 is, for instance, a pointing device such as a mouse, a selection device such as a mode switch, or an input device such as a keyboard. The input unit 35 may use a graphical user interface (GUI) as well. The input unit 35 may be built into the information processing apparatus 3 or may be externally attached. Further, a user may send various instructions or information to the information processing apparatus 3 by uttering voice. Therefore, the input unit 35 may be a microphone. The user inputs setting value of the management system 1 or setting value regarding operation of the mobile object 4, such as traveling, working, etc., from the input unit 35. Further, the user may input various setting values from the information processing terminal 9 as well.

### 1.2. Mobile object 4

The mobile object 4 may be a self-propelled vehicle or a manned vehicle. The mobile object 4 includes a power source capable of traveling. Therefore, the mobile object 4 may be a mobile object that travels on ground, travels at sea, or travels in air. The mobile object 4 may be electrically travelable with an internal battery (not shown) as a power source. The mobile object 4 may be a mobile working machine for performing a predetermined work. For instance, the mobile object 4 is a robotic lawn mower 41 or a ball picker robot 42. The robotic lawn mower 41 is a self-propelled robot that primarily mows lawn. The ball picker robot 42 is a self-propelled robot that collects balls. The ball is a sphere such as golf ball, tennis ball, baseball, etc. In particular, the mobile object 4 is preferably a ball picker robot 42 that collects golf ball since the management system 1 is used in a location where commercial power is difficult to obtain.

### 1.3. Charging station 5

The charging station 5 is arranged in the working area W and supplies power to the mobile object 4. The charging station 5 comprises a connection terminal (not shown), which is connected to a connection terminal included in the mobile object 4 to supply power to the mobile object 4. The mobile object 4 stops at the charging station 5 until power is supplied to a battery included in the mobile object 4. The battery included in the mobile object 4 may be charged in this manner, or a charged battery and an empty battery may be exchanged at the charging station 5. Note that charging method at the charging station 5 is not limited.

### 1.4. External battery 6

The external battery 6 is a battery that can be repeatedly charged and discharged (rechargeable battery). The external battery 6 refers to a secondary battery or a storage battery. These batteries are power devices that generate DC power through energy. The external battery 6 may be, but is not limited to, storage battery, alkaline storage battery, nickel cadmium battery, nickel metal hydride battery, lithium-ion battery, or the like, which are mainly used in a location where there is no commercial power supply. For instance, a large area such as park, golf course, airport, etc., where it is difficult to secure a commercial power source. In the present embodiment, the external battery 6 is configured to store power supplied to the mobile object 4 by the charging station 5.

### 1.5. Solar power generation 7

To use the external battery 6, electrical energy must be supplied from outside. Therefore, if solar power generation 7, wind power generation, biomass power generation, hydroelectric power generation, or geothermal power generation is available at a location where the mobile object 4 is used, the external battery 6 may be configured to store power from these renewable energies. Considering recent popularization and small power generation capability, the renewable energy it is preferably solar energy.

As represented in FIG. 2, the solar power generation 7 comprises a solar panel 71, a charge controller 72, and a converter 73. The solar panel 71 is made by collecting a plurality of solar batteries that convert small amounts of light energy into electrical energy, putting them into some kind of frame or structure and forming into a panel shape. The solar battery can be broadly classified into silicon-based, compound semiconductor-based, and organic-based, but are not limited thereto in the present embodiment. The charge controller 72 is connected between the solar panel 71 and the external battery 6 to prevent over charging, over discharging, or reverse current flow. The converter 73 includes a transformer function to change voltage of the external battery 6 and sends power to the charging station 5 with an appropriate voltage value.

### 1.6. External server 8

The external server 8 is electrically connected to the information processing apparatus 3 through an electrical information line. Therefore, the information processing apparatus 3 is configured to access the external server 8, which is connected to the electrical information line, to obtain various information stored on the external server 8.

### 1.7. Information processing terminal 9

The information processing terminal 9 is a terminal such as tablet terminal, personal data assistant (PDA), notebook personal computer (PC), etc., or is a stand-alone type terminal that can be used alone. Thus, the information processing terminal 9 may be a portable terminal 91 such as a mobile terminal, or a PC 92 such as a fixed terminal. Such information processing terminal 9 is electrically connected to the information processing apparatus 3 through an electrical information line. Therefore, various information can be transmitted/received bidirectionally between the information processing terminal 9 and the information processing apparatus 3.

### 1.8. Working area W

The working area W is an area that specifies a range for the mobile object 4 to travel. Shape of the working area W, in which the mobile object 4 can travel, is not limited as long as it is continuous and has a closed space. By recognizing the working area W, the mobile object 4 can travel within a designated working area W. A method for recognition is to bury a wire underground at an outer edge of the working area W, and pass electric current through the wire so as to allow the mobile object 4 to detect electric current and recognize the working area W.

### 1.9. Instruction information DI and operation information MI

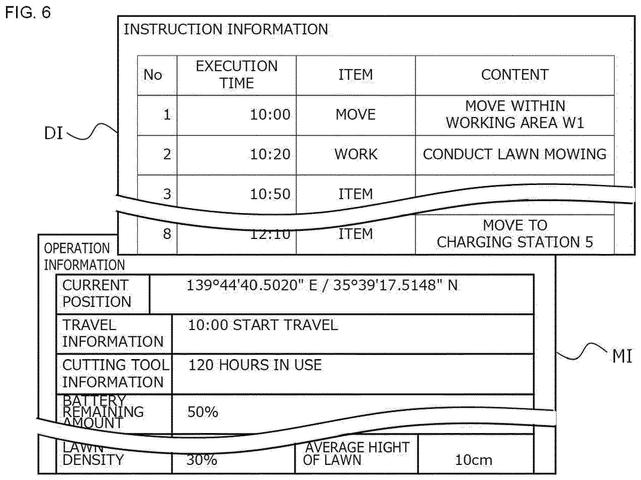

FIG. 6 is a diagram showing an example of instruction information DI and operation information MI used in the management system 1. The instruction information DI is a series of data that allows the information processing apparatus 3 to control the mobile object 4. The operation information MI is data related to travel history, travel status, or usage status of equipment such as internal batteries, devices, and parts provided by the mobile object 4, etc. The instruction information DI and the operation information MI shown in FIG. 6 are represented as examples, the data format and data content are not limited to these description examples.

### 1.10. Weather information WI and flight information OI

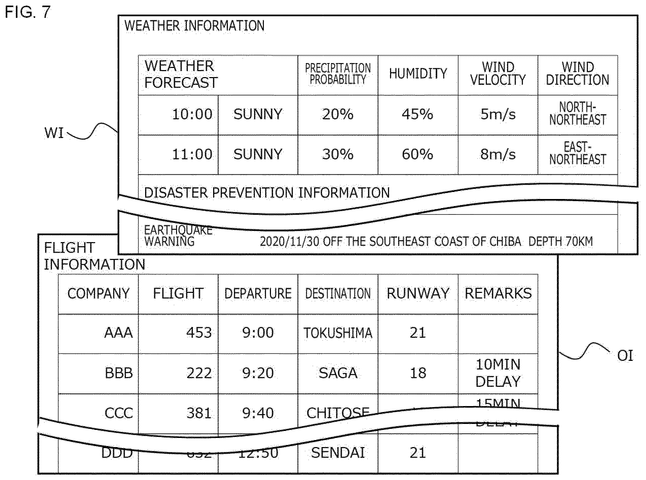

FIG. 7 is a diagram showing an example of weather information WI and flight information OI used in the management system 1. The weather information WI and the flight information OI are one of various types of information stored in the external server 8 and are external data that the information processing apparatus 3 refers to when controlling the mobile object 4. Data format and data content are not limited to these description examples.

### 2. Functional configuration

Chapter 2 describes a functional configuration according to the present embodiment. As represented in FIG. 5, the information processing apparatus 3 configuring the management system 1 includes a controller 33, and furthermore, the controller 33 includes an acquisition unit 331, an instruction generation unit 332, a transmission unit 333, and a preservation unit 334. That is, information processing by software (stored in the storage unit 32) is specifically realized by hardware (controller 33), in such a manner that function of each unit can be performed. Hereinafter, each component will be further described.

### 2.1. Acquisition unit 331

The acquisition unit 331 is configured to acquire information of various components (components of the management system 1) that can communicate with the information processing apparatus 3. Specifically, the acquisition unit 331 is configured to acquire remaining amount information indicating remaining amount of the external battery 6. The acquisition unit 331 is configured to acquire operation information MI regarding operation of the mobile object 4. Furthermore, the information processing apparatus 3 is configured to acquire information held by the external server 8 electrically connected to an electric communication line. Therefore, for instance, the acquisition unit 331 may be configured to acquire the weather information WI from an external server 81. Similarly, the acquisition unit 331 may be configured to acquire the flight information OI indicating aircraft operation status from an external server 82. Information useful for management of the mobile object 4 other than the above-mentioned information is all information to be acquired.

### 2.2. Instruction generation unit 332

The instruction generation unit 332 is configured to generate the instruction information DI that controls the mobile object 4. The instruction information DI is information regarding operation of the mobile object 4. Therefore, the instruction information DI may be data related to operation parameter or data related to operation program for controlling the mobile object 4. The instruction information DI is not limited as long as it controls operation of the mobile object 4 such as traveling, working, etc.

### 2.3. Transmission unit 333

The transmission unit 333 transmits various information to various components (components of the management system 1) that can communicate with the information processing apparatus 3. As a result, the various components operate. Specifically, the transmission unit 333 is configured to transmit the instruction information DI to the mobile object 4, thereby controlling operation of the mobile object 4. Furthermore, the information processing apparatus 3 is configured to transmit various information to the external server 8, which is electrically connected to an electric communication line. Therefore, the transmission unit 333 is configured to transmit the operation information MI possessed by the mobile object 4 among the various information to the external server 8 that controls the mobile object 4. The timing at which the transmission unit 333 transmits the various information is not limited. The transmission unit 333 may transmit the various information when a certain event occurs or in response to a request from the user or the mobile object 4, or the transmission unit 333 may transmit the various information at a predetermined time.

### 2.4. Preservation unit 334

The preservation unit 334 is configured to store the instruction information DI for the information processing apparatus 3 to control the mobile object 4, or the operation information MI acquired by the information processing apparatus 3 from the mobile object 4. In addition to these pieces of information, the preservation unit 334 may store various information such as the weather information WI and the flight information OI acquired by the information processing apparatus 3 from the external server 8 in the storage unit 32.

### 3. Function of management system 1

Each function of the management system 1 described in Chapters 1 and 2 will be illustrated in Chapter 3.

### 3.1. Function for controlling mobile object 4 according to remaining amount of external battery 6

When the mobile object 4 is a robotic lawn mower 41 or a ball picker robot 42, as represented in FIG. 1, primary service space of the mobile object 4 is golf course, airfield, or park. Hereinafter, the mobile object 4 is described as the robotic lawn mower 41. Many of outdoor locations described above are not comprise commercial power supply, and the user needs to use the external battery 6 to run the robotic lawn mower 41 (mobile object 4). That is, the external battery 6 supplies power to the charging station 5 that supplies power to an internal battery (not shown) comprised in the mobile object 4, the information processing apparatus 3 that controls the mobile object 4, and a wire laid on an outer edge of the working area W as described above.

In such a location, if charge level of the external battery 6 drops and power is not properly supplied to each device, the mobile object 4 may unable to recognize location of the charging station 5 or the wire laid on the outer edge of the working area W. Once the robotic lawn mower 41 (mobile object 4) is in such a state, it stops for safety reason. Further, even if the information processing apparatus 3 stops and becomes unable to communicate with the robotic lawn mower 41 (mobile object 4), the robotic lawn mower 41 will eventually stop. The robotic lawn mower 41 (mobile object 4) in such a stopped state needs to be operated directly by the user to restore. Therefore, the user needs to move within the wide working area W. In some cases, the user needs to supply power directly to the internal battery of the mobile object 4.

To solve the above-mentioned problem, the acquisition unit 331 of the information processing apparatus 3 electrically connected to the external battery 6 is configured to acquire remaining amount information indicating remaining amount of the external battery 6. Timing at which the acquisition unit 331 acquires the remaining amount information may be, for instance, at a predetermined interval or when the remaining amount information falls below a predetermined threshold by a sensor (not shown) provided in the external battery 6. At any timing, the instruction generation unit 332 may generate instruction information DI for controlling the robotic lawn mower 41 (mobile object 4) based on the remaining amount information acquired by the acquisition unit 331. The generated instruction information DI is transmitted to the mobile object 4 by the transmission unit 333.

Here, the instruction information DI for controlling the robotic lawn mower 41 (mobile object 4) may be information for the robotic lawn mower 41 (mobile object 4) to move to a wire laid on the outer edge of the working area W, or may be information for moving to a predetermined location. Moving location is not limited as long as the mobile object 4 can move safely. However, to quickly charge the internal battery of the mobile object 4 after the external battery 6 has been charged, it is preferred that the robotic lawn mower 41 (mobile object 4) be configured to move to the charging station 5 based on the instruction information DI. Content of the instruction information DI may be determined according to the remaining amount of the external battery 6. The instruction information DI may be information regarding work specific to the robotic lawn mower 41 (mobile object 4). For instance, if the mobile object 4 is the robotic lawn mower 41, the instruction information DI may be to stop the robotic lawn mower 41 from mowing lawn.

By controlling the robotic lawn mower 41 (mobile object 4) according to the remaining amount of the external battery 6 in this way, the robotic lawn mower 41 (mobile object 4) can return to the charging station 5 in advance even if a wire surrounding the working area W stops functioning due to the low remaining amount of the external battery 6. This reduces the need for the user to travel to a side of the robotic lawn mower 41 (mobile object 4), which is stopped within the wide working area W, to perform a return operation. Work efficiency of the robotic lawn mower 41 (mobile object 4) may improve by reducing such return operation.

### 3.2. Function for controlling mobile object 4 by understanding state of the mobile object 4

The information processing apparatus 3 may control the mobile object 4 based on various information possessed by various electrically connected and communicable components (components of the management system 1) as well as the external battery 6. Specifically, the acquisition unit 331 is configured to acquire operation information MI regarding operation of the mobile object 4, and the instruction generation unit 332 is configured to generate instruction information DI for controlling the mobile object 4 based on the operation information MI. For instance, the instruction generation unit 332 may generate the instruction information DI according to the remaining amount of the internal battery of the mobile object 4. Before the internal battery of the mobile object 4 becomes too low to travel, the instruction generation unit 332 generates instruction information DI to return to the charging station 5, and the transmission unit 333 transmits the instruction information DI to the mobile object 4.

Here, the operation information MI is not only the remaining amount of the internal battery of the mobile object 4, but also various information related to operation of the mobile object 4. For instance, the various information may be operation information such as travel distance of the mobile object 4, information on area where work has been completed, or the like. If the mobile object 4 is the robotic lawn mower 41, the operation information MI may include state (density) of lawn or state of a cutting tool of the robotic lawn mower.

The instruction information DI is generated according to content of the operation information MI. When the operation information MI is the state (density) of the lawn, the instruction information DI regarding operation of the robotic lawn mower 41 (mobile object 4), such as operation parameter of the cutting tool or a working range of the robotic lawn mower 41 (mobile object 4), is generated. Further, when the operation information MI is the state of the cutting tools of the robotic lawn mower 41 (mobile object 4), if the cutting tool is a poor condition, the instruction information DI to return to the charging station 5 is generated and the robotic lawn mower 41 (mobile object 4) waits at the charging station 5 until the cutting tool is replaced with new one.

By generating the instruction information DI based on the operation information MI possessed by the mobile object 4, the mobile object 4 is controlled based on latest state of the mobile object 4. As a result, the information processing apparatus 3 can accurately control the mobile object 4. When the mobile object 4 is the robotic lawn mower 41 or the ball picker robot 42, if an abnormality is detected in a part possessed by the mobile object 4, it can quickly return to the charging station 5, ensuring safe travel and work. The instruction information DI is an example and is generated according to usage location and usage condition of the robotic lawn mower 41.

### 3.3. Function to control mobile object 4 based on information from external server 8

The instruction information DI may be generated by the instruction generation unit 332 of the information processing apparatus 3 according to a predetermined rule, or may be generated based on information transmitted from the external server 8. The transmission unit 333 transmits the operation information MI to the external server 8. The user may confirm content of the operation information MI transmitted to the external server 8 and, if necessary, send the instruction information DI to the information processing apparatus 3. The transmission unit 333 further transmits the instruction information DI transmitted from the external server 8 to the mobile object 4. In this way, by cooperating with the external server 8, the management system 1 can solve problem that is difficult to solve by exchanging information between the information processing apparatus 3 and the mobile object 4 through intervention of the user.

The information processing apparatus 3 is configured to communicate with not only the external server 8 owned by the user but also other various external servers 8 through an electric communication line. Therefore, the acquisition unit 331 is configured to acquire weather information WI from the external server 81. The instruction generation unit 332 is configured to generate instruction information DI for controlling the mobile object 4 based on the weather information WI. Further, the acquisition unit 331 is configured to acquire flight information OI indicating aircraft operation status from the external server 82. The instruction generation unit 332 is configured to generate instruction information DI for controlling the mobile unit based on the flight information OI. The weather information WI and the flight information OI are only examples, and the acquisition unit 331 is configured to acquire all information possessed by the external server 8 that is useful for controlling the mobile object 4. The instruction generation unit 332 is configured to generate instruction information DI based on the useful information.

The weather information WI includes not only weather information for an area in which the mobile object 4 travels, but also disaster prevention information such as earthquake information, tsunami information, volcano information, and typhoon information. Based on the weather information WI, the instruction generation unit 332 generates instruction information DI including, for example, a time period during which the mobile object 4 is allowed to travel and work. By having the acquisition unit 331 acquire the weather information WI in advance, the management system 1 can safely control the mobile object 4 to protect device of the mobile object 4 and allow it to operate without malfunction. Further, it also leads to ensuring safety of the location where the mobile object 4 is used.

If the mobile object 4 is the robotic lawn mower 41, the robotic lawn mower 41 may be used in an airport. In such a case, movement of the mobile object 4 that uses radio wave to move is restricted for safety reason under law such as the Civil Aeronautics Act. Therefore, based on the flight information OI, the instruction generation unit 332 generates instruction information DI including, for example, the time period during which the mobile object 4 is allowed to travel and work. By having the acquisition unit 331 acquire the flight information OI in advance, the management system 1 can ensure safety of the airport or other location where the mobile object 4 is used by safely controlling the mobile object 4.

### 3.4. Function for controlling mobile object 4 based on information that communication between information processing apparatus 3 and mobile object 4 is unavailable

The mobile object 4 is configured to continue operation, such as traveling, based on latest instruction information DI acquired from the information processing apparatus 3 prior to this when communication with the information processing apparatus 3 is unavailable. Therefore, the management system 1 can operate the mobile object 4 normally even if communication failure occurs between the information processing apparatus 3 and the mobile object 4 due to unforeseen circumstances. The latest instruction information DI here does not specify only the most recent instruction information DI, but includes a series of instruction information DI that allows normal operation.

For instance, when it is determined that the mobile object 4 is unable to communicate with the information processing apparatus 3, if the instruction information DI to return to the charging station 5 in 10 minutes has already been transmitted to the mobile object 4, the mobile object 4 promptly returns to the charging station 5 in 10 minutes. Further, when the mobile object 4 has last received the instruction information DI to work in another working area W, the mobile object 4 promptly returns to the charging station 5 after working in another working area W.

In this manner, by continuing operation such as traveling based on the latest instruction information DI and having the information processing apparatus 3 move the mobile object 4 to a predetermined location such as a charging station 5, the latest instruction information DI is surely fulfilled and the mobile object 4 can be allowed to move to a safe location. Even if communication between the information processing apparatus 3 and the mobile object 4 becomes unavailable, a user who manages the mobile object 4 is relieved of the burden of restoration operation since the mobile object 4 can operate based on the instruction information DI until then.

With the functions described above, the management system 1 can safely and efficiently operate the mobile object 4 such as the robotic lawn mower 41 or the ball picker robot 42 even in a location where commercial power supply is unavailable. In addition, since the external battery 6 can be charged by renewable energy source such as solar power generation 7, the management system 1 for mobile object such as the robotic lawn mower 41 or the ball picker robot 42 will be beneficial for a sustainable society in the future.

### REFERENCE SIGNS LIST

1: Management system
3: Information processing apparatus
30: Communication bus
31: Communication unit
32: Storage unit
33: Controller
331: Acquisition unit
332: Instruction generation unit
333: Transmission unit
334: Preservation unit
34: Display unit
35: Input unit
4: Mobile object
41: Robotic lawn mower
42: Ball picker robot
5: Charging station
6: External battery
7: Solar power generation
71: Solar panel
72: Charge controller
73: Converter
8: External server
81: External server
82: External server
9: Information processing terminal
91: Mobile terminal
92: Personal computer
DI: Directive information
MI: Operation information
OI: Operation information
W: Working area
WI: Weather information

## Claims

1. A management system (1) for a mobile object (4), comprising:
an information processing apparatus (3) including
an acquisition unit (331) configured to acquire remaining amount information indicating remaining amount of an external battery (6), wherein the external battery (6) is configured to store power provided to the mobile object (4) by a charging station (5),
**characterised in that** the information processing apparatus (3) further includes:
an instruction generation unit (332) configured to generate instruction information (DI) for controlling the mobile object (4) based on the remaining amount information, wherein the instruction information (DI) is information regarding operation of the mobile object (4); and
a transmission unit (333) configured to transmit the instruction information (DI) to the mobile object (4), thereby operation of the mobile object (4) is controlled.

2. The management system (1) according to claim 1, wherein:
the acquisition unit (331) is configured to acquire operation information (MI) regarding operation of the mobile object (4), and
the instruction generation unit (332) is configured to generate the instruction information (DI) for controlling the mobile object (4) based on the operation information (MI).

3. The management system (1) according to claim 2, wherein:
the transmission unit (333) is configured to transmit the operation information (MI) to an external server managing the mobile object (4).

4. The management system (1) according to any one of claims 1 to 3, wherein:
the mobile object (4) is configured to move to the charging station (5) based on the instruction information (DI).

5. The management system (1) according to any one of claims 1 to 4, wherein:
the external battery (6) is configured to store power from renewable energy.

6. The management system (1) according to claim 5, wherein:
the renewable energy is solar energy.

7. The management system (1) according to any one of claims 1 to 6, wherein:
the acquisition unit (331) is configured to acquire weather information from an external server, and
the instruction generation unit (332) is configured to generate the instruction information (DI) for controlling the mobile object (4) based on the weather information.

8. The management system (1) according to any one of claims 1 to 7, wherein:
the acquisition unit (331) is configured to acquire flight information (OI) indicating aircraft operation status from an external server, and
the instruction generation unit (332) is configured to generate the instruction information (DI) for controlling the mobile object (4) based on the flight information (OI).

9. The management system (1) according to any one of claims 1 to 8, wherein:
when communication with the information processing apparatus (3) is unavailable, the mobile object (4) is configured to continue traveling based on latest instruction information (DI) previously acquired from the information processing apparatus (3).

10. The management system (1) according to any one of claims 1 to 9, wherein:
the mobile object (4) is a robotic lawn mower or a ball picker robot.

11. The management system (1) according to claim 10, wherein:
the acquisition unit (331) is configured to acquire operation information (MI) regarding movement of the mobile object (4), and
the operation information (MI) includes state of lawn or state of cutting tool of robotic lawn mower.

12. A program configured to allow a computer to function as each unit of the management system (1) according to any one of claims 1 to 11.

13. A management method for a mobile object (4), comprising:
an acquiring step of acquiring remaining amount information indicating remaining amount of an external battery (6), wherein the external battery (6) is configured to store power provided to the mobile object (4) by a charging station (5),
**characterised in that** the management method further comprises:
an instruction generating step of generating instruction information (DI) for controlling the mobile object (4) based on the remaining amount information, wherein the instruction information (DI) is information regarding operation of the mobile object (4); and
a transmitting step of transmitting the instruction information (DI) to the mobile object (4), thereby operation of the mobile object (4) is controlled.

## Patentansprüche

1. Managementsystem (1) für ein mobiles Objekt (4), umfassend:
eine Informationsverarbeitungsvorrichtung (3), die
eine Erfassungseinheit (331) umfasst, die konfiguriert ist, um Informationen über die verbleibende Menge zu erfassen, die die verbleibende Menge einer externen Batterie (6) angeben, wobei die externe Batterie (6) konfiguriert ist, um Energie zu speichern, die dem mobilen Objekt (4) durch eine Ladestation (5) bereitgestellt wird,
**dadurch gekennzeichnet, dass** die Informationsverarbeitungsvorrichtung (3) ferner umfasst:
eine Befehlserzeugungseinheit (332), die konfiguriert ist, um Befehlsinformationen (DI) zum Steuern des mobilen Objekts (4) auf der Grundlage der Informationen über die verbleibende Menge zu erzeugen, wobei die Befehlsinformationen (DI) Informationen bezüglich des Betriebs des mobilen Objekts (4) sind; und
eine Übertragungseinheit (333), die konfiguriert ist, um die Befehlsinformationen (DI) an das mobile Objekt (4) zu übertragen, wodurch der Betrieb des mobilen Objekts (4) gesteuert wird.

2. Managementsystem (1) gemäß Anspruch 1, wobei:
die Erfassungseinheit (331) konfiguriert ist, um Betriebsinformationen (MI) bezüglich des Betriebs des mobilen Objekts (4) zu erfassen, und
die Befehlserzeugungseinheit (332) konfiguriert ist, um die Befehlsinformationen (DI) zum Steuern des mobilen Objekts (4) auf der Grundlage der Betriebsinformationen (MI) zu erzeugen.

3. Managementsystem (1) gemäß Anspruch 2, wobei:
die Übertragungseinheit (333) konfiguriert ist, um die Betriebsinformationen (MI) an einen externen Server zu übertragen, der das mobile Objekt (4) verwaltet.

4. Managementsystem (1) gemäß einem der Ansprüche 1 bis 3, wobei:
das mobile Objekt (4) so konfiguriert ist, dass es sich auf der Grundlage der Befehlsinformationen (DI) zur Ladestation (5) bewegt.

5. Managementsystem (1) gemäß einem der Ansprüche 1 bis 4, wobei:
die externe Batterie (6) so konfiguriert ist, dass sie Strom aus erneuerbaren Energien speichert.

6. Managementsystem (1) gemäß Anspruch 5, wobei:
die erneuerbare Energie Solarenergie ist.

7. Managementsystem (1) gemäß einem der Ansprüche 1 bis 6, wobei:
die Erfassungseinheit (331) konfiguriert ist, um Wetterinformationen von einem externen Server zu erfassen, und
die Befehlserzeugungseinheit (332) konfiguriert ist, um die Befehlsinformationen (DI) zum Steuern des mobilen Objekts (4) auf der Grundlage der Wetterinformationen zu erzeugen.

8. Managementsystem (1) gemäß einem der Ansprüche 1 bis 7, wobei:
die Erfassungseinheit (331) konfiguriert ist, um Fluginformationen (OI), die den Betriebsstatus eines Flugzeugs anzeigen, von einem externen Server zu erfassen, und
die Befehlserzeugungseinheit (332) konfiguriert ist, um die Befehlsinformationen (DI) zum Steuern des mobilen Objekts (4) auf der Grundlage der Fluginformationen (OI) zu erzeugen.

9. Managementsystem (1) gemäß einem der Ansprüche 1 bis 8, wobei:
das mobile Objekt (4) so konfiguriert ist, dass es seine Fahrt auf der Grundlage der neuesten Befehlsinformationen (DI), die zuvor von der Informationsverarbeitungsvorrichtung (3) erfasst wurden, fortsetzt, wenn keine Kommunikation mit der Informationsverarbeitungsvorrichtung (3) verfügbar ist.

10. Managementsystem (1) gemäß einem der Ansprüche 1 bis 9, wobei:
das mobile Objekt (4) ein Rasenmähroboter oder ein Ballaufsammelroboter ist.

11. Managementsystem (1) gemäß Anspruch 10, wobei:
die Erfassungseinheit (331) konfiguriert ist, um Betriebsinformationen (MI) bezüglich der Bewegung des mobilen Objekts (4) zu erfassen, und
die Betriebsinformationen (MI) den Zustand des Rasens oder den Zustand des Schneidwerkzeugs des Rasenmähroboters umfassen.

12. Programm, das konfiguriert ist, um einem Computer zu ermöglichen, als jede Einheit des Managementsystems (1) gemäß einem der Ansprüche 1 bis 11 zu funktionieren.

13. Managementverfahren für ein mobiles Objekt (4), umfassend:
einen Erfassungsschritt des Erfassens von Informationen über die verbleibende Menge, die die verbleibende Menge einer externen Batterie (6) anzeigen, wobei die externe Batterie (6) konfiguriert ist, um Energie zu speichern, die dem mobilen Objekt (4) durch eine Ladestation (5) bereitgestellt wird,
**dadurch gekennzeichnet, dass** das Managementverfahren ferner umfasst:
einen Befehlserzeugungsschritt des Erzeugens von Befehlsinformationen (DI) zum Steuern des mobilen Objekts (4) auf der Grundlage der Informationen über die verbleibende Menge, wobei die Befehlsinformationen (DI) Informationen bezüglich des Betriebs des mobilen Objekts (4) sind; und
einen Übertragungsschritt des Übertragens der Befehlsinformationen (DI) an das mobile Objekt (4), wodurch der Betrieb des mobilen Objekts (4) gesteuert wird.

## Revendications

1. Système de gestion (1) pour un objet mobile (4), comprenant :
un appareil de traitement d'informations (3) incluant
une unité d'acquisition (331) configurée pour acquérir des informations de niveau restant indiquant le niveau restant d'une batterie externe (6), dans lequel la batterie externe (6) est configurée pour stocker l'énergie fournie à l'objet mobile (4) par une station de charge (5), **caractérisé en ce que** l'appareil de traitement d'informations (3) inclut en outre :
une unité de génération d'instruction (332) configurée pour générer des informations d'instruction (DI) pour commander l'objet mobile (4) sur la base des informations de niveau restant, dans lequel les informations d'instruction (DI) sont des informations concernant le fonctionnement de l'objet mobile (4) ; et
une unité de transmission (333) configurée pour transmettre les informations d'instruction (DI) à l'objet mobile (4), permettant ainsi de commander le fonctionnement de l'objet mobile (4).

2. Système de gestion (1) selon la revendication 1, dans lequel :
l'unité d'acquisition (331) est configurée pour acquérir des informations de fonctionnement (MI) concernant le fonctionnement de l'objet mobile (4), et
l'unité de génération d'instruction (332) est configurée pour générer les informations d'instruction (DI) pour commander l'objet mobile (4) sur la base des informations de fonctionnement (MI).

3. Système de gestion (1) selon la revendication 2, dans lequel :
l'unité de transmission (333) est configurée pour transmettre les informations de fonctionnement (MI) à un serveur externe gérant l'objet mobile (4).

4. Système de gestion (1) selon l'une quelconque des revendications 1 à 3, dans lequel :
l'objet mobile (4) est configuré pour se déplacer vers la station de charge (5) sur la base des informations d'instruction (DI).

5. Système de gestion (1) selon l'une quelconque des revendications 1 à 4, dans lequel :
la batterie externe (6) est configurée pour stocker l'énergie provenant d'une énergie renouvelable.

6. Système de gestion (1) selon la revendication 5, dans lequel :
l'énergie renouvelable est l'énergie solaire.

7. Système de gestion (1) selon l'une quelconque des revendications 1 à 6, dans lequel :
l'unité d'acquisition (331) est configurée pour acquérir des informations météorologiques à partir d'un serveur externe, et
l'unité de génération d'instruction (332) est configurée pour générer les informations d'instruction (DI) pour commander l'objet mobile (4) sur la base des informations météorologiques.

8. Système de gestion (1) selon l'une quelconque des revendications 1 à 7, dans lequel :
l'unité d'acquisition (331) est configurée pour acquérir des informations de vol (OI) indiquant un état de fonctionnement d'aéronef à partir d'un serveur externe, et
l'unité de génération d'instruction (332) est configurée pour générer les informations d'instruction (DI) pour commander l'objet mobile (4) sur la base des informations de vol (OI).

9. Système de gestion (1) selon l'une quelconque des revendications 1 à 8, dans lequel :
lorsque la communication avec l'appareil de traitement d'informations (3) n'est pas disponible, l'objet mobile (4) est configuré pour continuer à se déplacer sur la base des dernières informations d'instruction (DI) précédemment acquises à partir de l'appareil de traitement d'informations (3).

10. Système de gestion (1) selon l'une quelconque des revendications 1 à 9, dans lequel :
l'objet mobile (4) est un robot tondeuse à gazon ou un robot ramasseur de balles.

11. Système de gestion (1) selon la revendication 10, dans lequel :
l'unité d'acquisition (331) est configurée pour acquérir des informations de fonctionnement (MI) concernant le mouvement de l'objet mobile (4), et
les informations de fonctionnement (MI) incluent un état de la pelouse ou un état de l'outil de coupe du robot tondeuse à gazon.

12. Programme configuré pour permettre à un ordinateur de fonctionner comme chaque unité du système de gestion (1) selon l'une quelconque des revendications 1 à 11.

13. Procédé de gestion pour un objet mobile (4), comprenant :
une étape d'acquisition consistant à acquérir des informations de niveau restant indiquant le niveau restant d'une batterie externe (6), dans lequel la batterie externe (6) est configurée pour stocker l'énergie fournie à l'objet mobile (4) par une station de charge (5),
**caractérisé en ce que** le procédé de gestion comprend en outre :
une étape de génération d'instruction consistant à générer des informations d'instruction (DI) pour commander l'objet mobile (4) sur la base des informations de niveau restant, dans lequel les informations d'instruction (DI) sont des informations concernant le fonctionnement de l'objet mobile (4) ; et
une étape de transmission consistant à transmettre les informations d'instruction (DI) à l'objet mobile (4), permettant ainsi de commander le fonctionnement de l'objet mobile (4).
